# EUROPÄISCHE PATENTSCHRIFT

(11) **EP 0 418 717 B1**
(45) Veröffentlichungstag und Bekanntmachung des Hinweises auf die Patenterteilung: **18.11.1993**
(21) Anmeldenummer: 90117556.2
(22) Anmeldetag: 12.09.1990
(51) Int. Cl.: F16F 1/36, F16F 1/42, B60K 5/12

(54) **Ringförmiger Federkörper aus Faserverbundwerkstoff**
Annular spring element of fibre reinforced plastic material
Elément ressort annulaire en matière composite renforcée par des fibres

(30) Priorität: 19.09.1989 DE 3931219
(43) Veröffentlichungstag der Anmeldung: 27.03.1991
(73) Patentinhaber: METZELER GIMETALL AG, D-80992 München (DE)
(72) Erfinder: Richter, Matthias, Dr., D-8084 Inning (DE)
(74) Vertreter: Seibert, Hannelore

(56) Entgegenhaltungen:
- DE-A- 3 908 474
- DE-C- 3 022 418
- DE-U- 1 739 290
- GB-A- 987 510

## Beschreibung

Die Erfindung bezieht sich auf einen ringförmigen Federkörper aus Faserverbundwerkstoff zur schwingungsisolierenden Lagerung von Antriebsaggregraten, insbesondere in Kraftfahrzeugen, der mindestens einen Wickelkörper aus mehreren konzentrischen Wickel lagen von in Umfangsrichtung und quer zur Belastungsrichtung des Wickelkörpers verlaufenden, mit Kunstharz getränkten Fasern aufweist und auf zwei gegenüberliegenden Seiten mit Krafteinleitungselementen versehen ist.

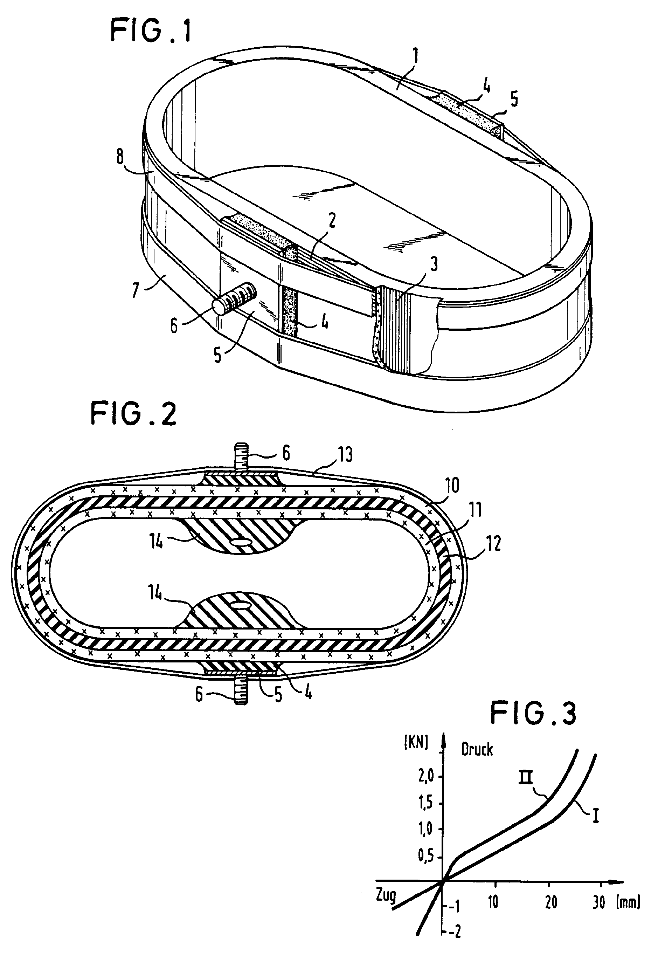

Ein derartiger Federkörper ist in der DE-C-3 022 418 beschrieben. Ein derartiger Federkörper hat den Vorteil, daß er sich unter statischer Belastung nicht setzt und daß seine dynamische Steifigkeit bei steigenden Frequenzen nicht wesentlich über die statische Steifigkeit ansteigt, so daß damit eine gute akustische Isolierung der abzustützenden Aggregate gewährleistet ist. Ein weiterer Vorteil besteht darin, daß sich diese Eigenschaften auch bei Temperaturen unter - 20°C nur wenig ändern. Nachteilig ist jedoch, daß ein solcher Federkörper eine nahezu lineare Federkennlinie im Arbeitsbereich und im Zugbereich aufweist, wie man aus der Kurve I in Fig. 3 ersieht, jedoch eine stark progressive Kennlinie nach dem Eingriff vorhandener Druckanschläge.

Der Erfindung liegt daher die Aufgabe zugrunde, einen Federkörper zu schaffen, der auch bei Entlastung des Federkörpers und im Zugbereich eine progressive Kennlinie und eine flache Kennlinie für eine niedrige Steifigkeit im Arbeitspunkt aufweist.

Zur Lösung dieser Aufgabe ist erfindungsgemäß vorgesehen, daß der Federkörper auf der Außenseite von mindestens einem den Federkörper und die Krafteinleitungselemente im Umfangsrichtung vollständig umschließenden, aus Stahl bestehenden Spannband unter Vorspannung umfaßt ist.

Mit einer solchen Vorspannung ergibt sich eine niedrige Steifigkeit im Arbeitspunkt, was sich positiv auf die akustischen Übertragungseigenschaften auswirkt, während größere Motorbewegungen im niederfrequenten Bereich durch die beidseitig progressive Federkennlinie außerhalb des Arbeitspunktes begrenzt werden.

Die Krafteinleitungselemente können aus über Gummizwischenlagen aufvulkanisierte Metallplatten bestehen.

Zweckmäßig ist es ferner, wenn zwei parallele Spannbänder vorgesehen sind, von denen je eines parallel zur Oberkante und zur Unterkante des Federkörpers verläuft.

Anhand einer schematischen Zeichnung sind Aufbau und Funktionsweise von Ausführungsbeispielen nach der Erfindung näher erläutert. Dabei zeigen
- Fig. 1: eine perspektivische Ansicht eines entsprechenden Federkörpers aus einem Wickelkörper mit aufgelegten Spannbändern,
- Fig. 2: einen Querschnitt durch einen Federkörper aus zwei konzentrischen Wickelkörpern mit aufgelegtem Spannband und
- Fig. 3: ein Diagramm der Federkennlinie für Federkörper mit und ohne Spannband.

In Fig. 1 ist ein Federkörper aus einem einzigen Wickelkörper 1 dargestellt, der angenähert ovale Form mit zwei geraden Mittelteilen und halbkreisförmigen Seitenteilen aufweist. Es ist aber - je nach den gewünschten Anforderungen - auch jede andere geschlossene geometrische Form möglich, wie beispielsweise eine Ellipse oder ein Kreis.

Der Wickelkörper 1 besteht aus mehreren Schichten Fasern, die hauptsächlich quer zur Beanspruchungsrichtung umlaufend gewickelt sind. Im Teilschnit ist dabei die außenliegende Schicht 2 gezeigt. Einzelne Schichten, vorzugsweise die mittlere Schicht 3 des Wickelkörpers 1, bestehen jedoch zweckmäßigerweise aus Gewebe mit quer verlaufenden Fasern bzw. aus Fasern, die in einem von dem der äußeren Lage 2 abweichenden Winkel gewickelt sind.

Als verstärkende Fasern kommen im wesentlichen Glasfasern, aber auch Kohlefasern oder Aramid infrage, während als aushärtbare Matrixmaterialien im wesentlichen Duroplaste, aber auch Thermoplaste, z.B. Polyetheretherketon (PEEK), verwendet werden können.

Der fertiggewickelte, getränkte und ausgehärtete Wickelkörper 1 weist ferner einander gegenüberliegende Krafteinleitungselemente auf, die aus über Gummizwischenlagen 4 aufvulkanisierte Metallplatten 5 mit jeweils einem entsprechenden Anschlußbolzen 6 bestehen, über die sie dann an den entsprechenden Lagerpunkten festgelegt sind.

Um nun eine optimale Federkennlinie zu erhalten, sind außen um den Wickelkörper 1 zwei Spannbänder 7 und 8 unter Vorspannung aufgebracht, die den Wickelkörper 1 sowie die Krafteinleitungselemente 4, 5 voll umschließen.

Die Spannbänder 7 und 8 können aus Federstahl bestehen, es ist aber auch der Einsatz anderer hochfester und zugsteifer Materialien möglich. Das Verschließen der Spannbänder kann durch bekannte Verschlußtechniken, z.B. Schweißen, Nieten, Bördeln usw. erfolgen.

Bei dem Ausführungsbeispiel nach Fig. 2 sind zwei konzentrische, parallel zueinander verlaufende Wickelkörper 10 und 11 vorgesehen, die über eine elastische Zwischenschicht 12 aus Gummi, die sich über den gesamten Umfang des Zwischenraums erstreckt, miteinander verbunden sind. Die beiden Wickelkörper 10 und 11 werden dabei in gleicher Weise und im gleichen Aufbau wie der Wickelkörper 1 nach Fig. 1 hergestellt und anschließend wird die entsprechende Gummischicht 12 zwischen den beiden Wickelkörpern 10 und 11 einvulkanisiert. Auch hierbei ist das obere umlaufende Spannband 13 zu erkennen. Zusätzlich sind noch innenliegende Druckanschläge 14 vorgesehen, die aus je einem auf dem inneren Wickelkörper 11 aufvulkanisierten Gummikissen bestehen.

Zur einfachen Herstellung kann es zweckmäßig sein, wenn die Zwischenschicht aus im Winkel zur Umfangsrichtung verlaufenden eingewickelten Gummibändern oder aber aus schichtweise eingewickelten Gleitfolien besteht, so daß der gesamte Verbundkörper in einem Arbeitsgang hergestellt werden kann.

Auch hierbei ist der Federkörper in entsprechender Weise vorgespannt. Die Vorspannung wird dabei dadurch aufgebracht, daß die beiden Krafteinleitungselemente 4, 5 gegeneinander bis zur Berührung der Druckanschläge 14 zusammengepreßt werden, wobei sich der Abstand der Scheitelpunkte der beiden seitlichen Kreisbögen und damit der Gesamtumfang des Federkörpers verringert, und in diesem Zustand die Spannbander aufgebracht und verschlossen werden.

Ein derartiger über Spannbänder vorgespannter Federkörper weist eine Federkennlinie auf, wie es der Kurve II nach Fig. 3 entspricht. Der Unterschied zur Federkennlinie eines nicht vorgespannten Federkörpers entsprechend der Kurve 1 ist auffällig. Ein nicht vorgespannter Federkörper hat danach eine nahezu lineare Federkennlinie im Arbeitsbereich und im Zugbereich, hingegen eine stark progressive Kennlinie nach dem Eingriff des Druckanschlags.

Ein vorgespannter Federkörper entsprechend der Kurve II weist eine flache Kennlinie im Arbeitsbereich mit einer relativ niedrigen Steifigkeit des Federkörpers auf, während bei einer Entlastung eines solchen vor gespannten Lagers bis hin zu einer Belastung durch Zugkräfte jetzt ein weich einsetzender progressiver Kennlinienverlauf vorhanden ist. In Verbindung mit den entsprechenden Druckanschlägen erhält man also die gewünschte S-förmige Federkennlinie.

Ein solches Lager kann eine sehr niedrige Steifigkeit im Arbeitspunkt besitzen, was sich positiv auf die akustischen Übertragungseigenschaften auswirkt, während größere Motorbewegungen durch die beiderseitig progressive Federkennlinie außerhalb des Arbeitspunkts begrenzt werden.

Ein weiterer Vorteil eines solchen Federkörpers mit umlaufenden Spannbändern besteht in einer einfacheren Gestaltung der Krafteinleitungselemente. Wird nämlich ein solcher mit Spannbändern versehener Federkörper im Ausreißversuch beansprucht, so zeigt sich, daß die bei Lagern ohne Spannbander unter Zug stehenden Gummizwischenschichten 4 der Krafteinleitungselemente jetzt weiterhin einer reinen Druckbelastung unterliegen, da die Spannbänder 7 und 8 die Zugkräfte als seitliche Druckkräfte auf den eigentlichen Federkörper weitergeben. Dadurch können diese Krafteinleitungselemente auch durch einfache aufvulkanisierte Metallplatten 5 ersetzt werden. Gleiches gilt bei einer Schrägbeanspruchung des Lagers, deren Angriffskräfte über die Spannbander ebenfalls abgeleitet und verteilt werden, so daß sich derartige Federkörper auch für einen solchen Einsatz besser eignen.

## Patentansprüche

1. Ringförmiger Federkörper (1) aus Faserverbundwerkstoff zur schwingungsisolierenden Lagerung von Antriebsaggregaten, insbesondere in Kraftfahrzeugen, der mindestens einen Wickelkörper (1) aus mehreren konzentrischen Wickellagen (2, 3) von in Umfangsrichtung und quer zur Belastungsrichtung des Wikkelkörpers (1) verlaufenden, mit Kunstharz getränkten Fasern aufweist und auf zwei gegenüberliegenden Seiten mit Krafteinleitungselementen (4, 5) versehen ist, **dadurch gekennzeichnet, daß** der Federkörper (1; 11, 12) auf der außenseite von mindestens einem, den Federkörper (1; 11,12) und die Krafteinleitungselemente (4,5) in Umfangsrichtung vollständig umschließenden, aus Stahl bestehenden Spannband (7, 8; 13) unter Vorspannung umfaßt ist.

2. Federkörper nach Anspruch 1, dadurch gekennzeichnet, daß die Krafteinleitungselemente aus über Gummizwischenlagen (4) aufvulkanisierten Metallplatten (5) bestehen.

3. Federkörper nach einem der Ansprüche 1 oder 2, dadurch gekennzeichnet, daß zwei parallele Spannbander (7, 8) vorgesehen sind, von denen je eines parallel zur Oberkante und zur Unterkante des Federkörpers (1) verläuft.

## Claims

1. An annular spring element (1) made of fibre composites for the vibration-insulating mounting of drive units, more particularly in motor vehicles, which comprises at least one winding element (1) with a plurality of concentric winding layers (2, 3) of synthetic resin-impregnated fibres extending circumferentially and transversely to the loading direction of the winding element (1) and is provided on two opposite sides with force-introducing elements (4, 5), characterised in that the spring element (1; 11, 12) is enclosed on its outside under prestress by at least one tensioning band (7, 8; 13) which is made of steel and fully encloses the spring element (1; 11, 12) and the force-introducing elements (4, 5) circumferentially.

2. A spring element according to claim 1, characterised in that the force-introducing elements are formed by metal plates (5) vulcanised onto the winding element with the interposition of intermediate rubber layers (4).

3. A spring element according to one of claims 1 or 2, characterised in that two parallel tensioning bands (7, 8) are provided and extend parallel to the upper edge and lower edge respectively of the spring element (1).

## Revendications

1. Pièce élastique (1) annulaire, en matière composite renforcee de fibres, destinée à supporter, de manière à isoler des oscillations, des groupes d'entraînement, notamment dans des véhicules automobiles, qui comporte au moins une bobine (1) constituée de plusieurs couches enroulées (2,3) concentriques de fibres s'étendant dans la direction périphérique et transversalement à la direction de charge de la bobine (1) et imprégnées d'une résine de matière plastique, et qui est munie de deux éléments (4,5) de transmission des forces sur deux côtés opposés, caractérisée en ce que la pièce élastique (1,11,12) est enserrée avec précontrainte du côté exterieur par au moins une bande de serrage (7,8,13) en acier entourant entièrement la pièce élastique (1,11,12) et les éléments de transmission de force (4,5).

2. Pièce elastique suivant la revendication 1, caractérisée en ce que les éléments de transmission de force sont constitués de plaques métalliques (5) vulcanisées par des couches intermédiaires (4) en caoutchouc.

3. Pièce elastique suivant l'une des revendications 1 ou 2, caracterisée en ce qu'il est prevu deux bandes de serrage (7,8) parallèles, chacune d'entre elles s'étendant parallèlement au bord superieur et au bord inférieur de la pièce élastique (1).
